## Europäisches Patentamt
## European Patent Office
## Office européen des brevets

(11) Veröffentlichungsnummer : **0 199 856 B1**

(12) **EUROPÄISCHE PATENTSCHRIFT**

(45) Veröffentlichungstag der Patentschrift :
27.07.88

(51) Int. Cl.⁴ : **F 28 G  1/12, F 17 D  3/08**

(21) Anmeldenummer : **85200702.0**

(22) Anmeldetag : **03.05.85**

(54) Schleuse zum Auffangen kugelförmiger Reinigungskörper.

(43) Veröffentlichungstag der Anmeldung :
**05.11.86 Patentblatt 86/45**

(45) Bekanntmachung des Hinweises auf die Patenterteilung : **27.07.88 Patentblatt 88/30**

(84) Benannte Vertragsstaaten :
**DE FR GB IT SE**

(56) Entgegenhaltungen :
**EP-A- 0 100 000
DE-A- 3 140 803
DE-A- 3 222 579
DE-C- 3 207 465
FR-A-   701 049
FR-A- 2 502 988
GB-A-   309 344
GB-A- 1 155 065
US-A- 4 268 932**

(73) Patentinhaber : **GEA Energiesystemtechnik GmbH &
Co.
Südstrasse 48
D-4690 Herne 2 (DE)**

(72) Erfinder : **Borchert, Werner
Stammsberg 17
D-4330 Mülheim/ Ruhr (DE)**

(74) Vertreter : **Ackmann, Günther, Dr.-Ing.
Claubergstrasse 24 Postfach 10 09 22
D-4100 Duisburg 1 (DE)**

## Beschreibung

Die Erfindung betrifft eine Schleuse zum Auffangen kugelförmiger, aus Schaumgummi bestehender Reinigungskörper, die im Kreislauf durch das Kühlwasser eines Röhrenwärmetauschers o. dgl. geführt werden, wobei die Schleuse aus einem mit einem Sieb ausgerüsteten zylindrischen Gehäuse besteht, dessen Zuleitungs- und Ableitungsrohr jeweils mit einem Stutzen in das Gehäuse ragt und mit einem an einer Welle angebrachten Absperrorgan versehen ist.

Zur Reinigung der Rohre wassergekühlter Röhrenwärmetauscher o. dgl. werden in bekannter Weise kugelförmige Reinigungskörper aus Schaumgummi o. dgl., deren Durchmesser etwas über dem Innendurchmesser der Rohre liegt, in das Kühlwasser eingepumpt und durch die Rohre gedrückt. Nach Verlassen des Röhrenwärmetauschers werden diese aus dem Kühlwasser mittels einer Siebvorrichtung abgeschieden und im Kreislauf wieder dem dem Röhrenwärmetauscher zuströmenden Kühlwasser zugeleitet. Da die Reinigungskörper durch Abrieb einem Verschleiß ausgesetzt sind, müssen sie bei einer entsprechenden Verringerung ihres Durchmessers aus dem Kreislauf entfernt und durch neue Reinigungskörper ersetzt werden.

Um die Reinigungskörper vom Kühlwasser zu trennen und im Kreislauf zurückzuführen, ist aus der DE-A-32 22 579 ein Abscheider mit einem Fangrohr bekannt, in dem ein eine Siebmulde umschließender Drehschieber angeordnet ist und an welches ein Zuleitungsrohr für Spülwasser und die über eine zusätzliche Schleuse führende Rückleitung angeschlossen ist. In der Fangstellung des Drehschiebers werden die Reinigungskörper in der Siebmulde zurückgehalten, wobei das Zuleitungs- und das Ableitungsrohr vom Drehschieber verschlossen sind. Durch Verdrehen des Drehschiebers wird die offene Seite der Siebmulde dem Zuleitungsrohr- und Ableitungsrohr zugewendet, so daß die Reinigungskörper vom Spülwasser in das Ableitungsrohr transportiert werden. Diese bekannte Fangvorrichtung ist nur Teil des Abscheiders, arbeitet nur chargenweise und ist weder zur Kontrolle noch zum Austausch der Reinigungskörper geeignet. Ein freier Durchfluß der Reinigungskörper durch den Abscheider für einen Kreislauf ist nicht möglich. Um die Reinigungskörper aus dem Umlauf herausnehmen, kontrollieren und durch neue ersetzen zu können, ist vielmehr eine zusätzliche Schleuse mit einem verdrehbaren Sieb vorgesehen. Für eine kontinuierliche Arbeitsweise ist aus der JP-PS-47 22 765 eine siebartige Fangschleuse bekannt, bei der an einem Siebkorb und an eine Kammer unter dem Siebkorb je eine mit einem Ventil versehene Abzugsrohrleitung derart angeschlossen ist, daß entweder für den normalen Reinigungsbetrieb das Kühlwasser mit den Reinigungskörpern in die dem Kreislauf zugehörige Rohrleitung strömt, oder zur Kontrolle der Reinigungskörper das Kühlwasser durch die Siebfläche gelenkt wird und alle Reinigungskörper im Sieb gefangen werden. Die im Siebkorb zurückgehaltenen Reinigungskörper werden dann herausgenommen und sortiert, wobei die in ihrem Durchmesser zu stark verringerten Reinigungskörper durch neue ersetzt werden. Bei dieser Einrichtung werden die aus der Kühlwasserleitung abgeschiedenen Reinigungskörper zusammen mit einer als Trägerstoff dienenden Wassermenge mittels einer im Zuleitungsrohr der Fangeinrichtung angeordneten Pumpe von der Siebvorrichtung über die Fangvorrichtung und eines ihrer Ableitungsrohre in die vor dem Röhrenwärmetauscher liegende Kühlwasserleitung gefördert. Bei dieser Ausführung werden mithin drei Absperrorgane benötigt, deren Öffnen und Schließen zum Zwecke des Durchflusses oder des Fangens oder des Kontrollierens der Reinigungskörper funktionsgerecht zu steuern ist, wozu in der Regel aufwendige elektronische Steuerschaltungen und eine entsprechende Anzahl Steuermotoren erforderlich sind. Die in der Praxis verwendeten Kugelhähne verschleißen schnell und dichten dann nicht mehr ausreichend ab. Diese Schwierigkeiten gelten auch für die in der DE-A-32 27 708 beschriebenen Schleuse, bei der am unteren Ende des trichterförmigen Siebkorbes eine Absperrklappe angebracht ist, welche wechselweise den Auslaufstutzen des Siebkorbes oder die unter dem Siebkorb vorhandene Gehäusekammer mit dem Ableitungsrohr verbindet, das außerhalb des Gehäuses mit einem steuerbaren Absperrventil versehen ist.

Demgegenüber liegt der Erfindung die Aufgabe zugrunde, eine Schleuse der gattungsgemäßen Art derart auszubilden, daß die Zu- und Ableitungen auf einfachere Weise funktionsgerecht geöffnet bzw. abgesperrt werden und eine verbesserte Abdichtung durch die Absperrorgane erzielt wird.

Diese Aufgabe wird erfindungsgemäß dadurch gelöst, daß das Sieb aus einer Siebplatte besteht, die zwischen den Stutzen rechtwinklig zur Längsachse des Gehäuses am Gehäuse befestigt ist und einen Ausschnitt aufweist, der durch einen an der zentrisch zur Längsachse des Gehäuses gelagerten Welle angebrachten Drehschieber verschließbar ist und daß an der Welle gegen die Enden der Stutzen anstellbare Absperrklappen angeordnet sind.

Die Ausbildung hat den Vorteil, daß anstelle des bisher üblichen, in seinem Aufbau umständlichen Siebkorbes eine einfache Siebplatte vorgesehen ist, deren Ausschnitt durch einen Drehschieber verschließbar ist, welcher durch eine einfache zentrische Welle gesteuert wird. Durch nur drei Stellungen der Welle lassen sich die drei Betriebsstellungen der Schleuse einstellen. In der Kontrollstellung sind die Zuleitungs- und Ableitungsrohre und der Drehschieber geschlossen und der Inhalt der Schleusenkammer kann durch einen Kontrollstutzen, Deckel o. dgl. inspiziert werden.

In der Durchlaufstellung, in der die Reinigungskörper durch die Schleuse hindurchtransportiert werden, sind die Zuleitungs- und Ableitungsrohre und der Ausschnitt in der Siebplatte geöffnet, und in der Fangstellung sind die Zuleitungs- und Ableitungsrohre geöffnet, während sich der Drehschieber in seiner Sperrstellung befindet, so daß bei verschlossenem Ausschnitt das Transportwasser durch die Siebplatte strömen kann, die Reinigungskörper hingegen von der Siebplatte zurückgehalten werden.

Für eine besonders gut abdichtende Anlage der Absperrklappen gegen die Enden der Stutzen verläuft der Dichtungsrand der beiden Stutzen vorzugsweise etwa um 45° zu ihrer Längsachse und beide Dichtungsränder weisen in die gleiche Drehrichtung. Weiterhin sind die Absperrklappen zweckmäßigerweise jeweils auf einem an der Welle befestigten Dreharm derart angebracht, daß sie in einer bestimmten Drehlage der Welle beide dicht gegen den Dichtungsrand des zugehörigen Stutzens anliegen. Die beiden Stutzen und Absperrklappen sind jeweils einander diametral gegenüberliegend am Gehäuse bzw. an der Welle angeordnet.

Zur Bildung des Ausschnittes in der Siebplatte ist beispielsweise ein etwa ein Viertel des Umfangs erfassender sektorförmiger Ausschnitt und ein etwa halbkreisförmiger Drehschieber vorgesehen, dessen Sekante parallel zu den Absperrklappen verläuft. Hierfür ist der Drehschieber parallel zur Siebplatte verdrehbar an der Welle befestigt, wobei durch die Drehbewegung des Drehschiebers auch eine Reinigung der Siebplatte stattfindet. Zur Steuerung der Welle kann ein Stellmotor vorgesehen sein, der die Welle in die drei Funktionsstellungen bringt.

Ein Ausführungsbeispiel der Erfindung ist in der Zeichnung dargestellt ; es zeigt :

Fig. 1 eine Einrichtung zum Einleiten und Abscheiden kugelförmiger Reinigungskörper in den bzw. aus dem Kühlwasserkreislauf eines Röhrenwärmetauschers in einer schematischen Darstellung,

Fig. 2 die der Einrichtung nach Fig. 1 zugehörige Schleuse in ihrer Kontrollstellung in einem Längsschnitt und einem größeren Maßstab,

Fig. 3 den Gegenstand der Fig. 2 in einem Querschnitt,

Fig. 4 den Gegenstand der Fig. 2 in der Durchlaufstellung,

Fig. 5 den Gegenstand der Fig. 4 in einem Querschnitt,

Fig. 6 den Gegenstand der Fig. 2 in der Fangstellung und

Fig. 7 den Gegenstand der Fig. 6 in einem Querschnitt.

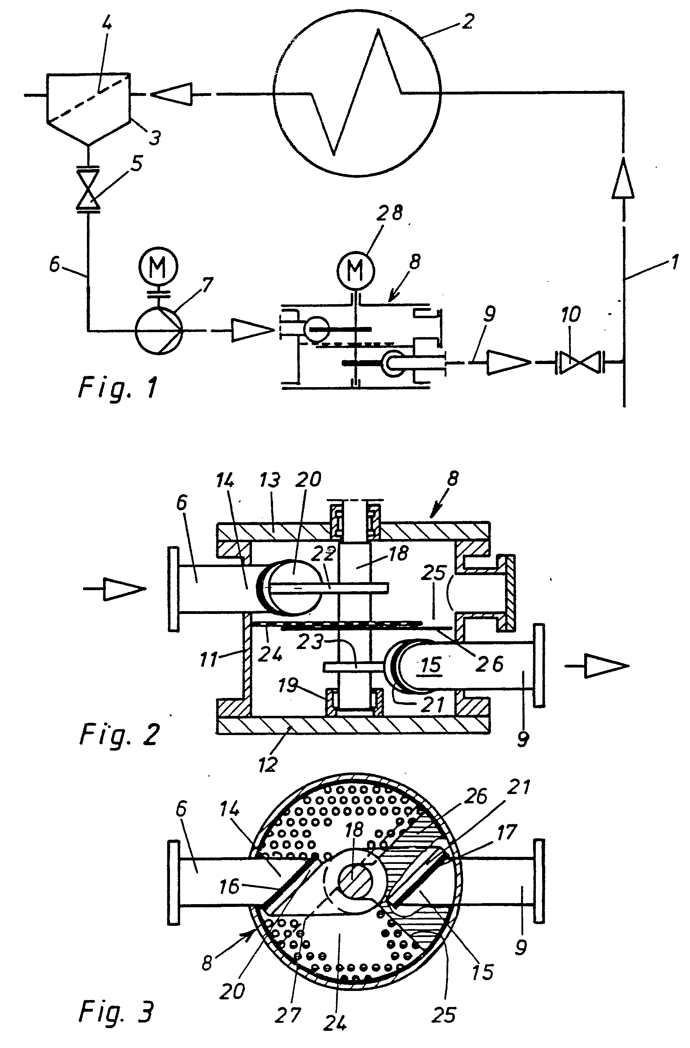

Wie Fig. 1 zeigt, wird Kühlwasser durch eine aus Kühlwasserrohren bestehende Kühlwasserleitung 1 mittels einer Kühlwasserpumpe durch einen Röhrenwärmetauscher 2 geführt. Zur Reinigung der Rohre des Röhrenwärmetauschers 2 werden elastisch verformbare, kugelförmig ausgebildete Reinigungskörper aus Gummi oder Kunststoff, deren Durchmesser etwas über dem Innendurchmesser der Rohre liegt, in bestimmten Zeitabständen in das Kühlwasser eingeleitet und durch die Rohre gedrückt. Nach Verlassen des Röhrenwärmetauschers 2 werden sie mittels einer Siebvorrichtung 3 aus dem Hauptstrom des Kühlwassers abgeschieden und über ein Rohrleitungssystem im Kreislauf wieder in den Hauptstrom eingeleitet. Die mit dem Sieb 4 der Siebvorrichtung 3 aus dem Kühlwasser abgeschiedenen Reinigungskörper werden zusammen mit einem kleinen Teilstrom über ein mit einem Ventil 5 versehenes Zuleitungsrohr 6 mittels einer Pumpe 7 einer Schleuse 8 zugeführt und in der Durchlaufstellung der Schleuse 8 über ein Ableitungsrohr 9 und ein Ventil 10 wieder in die Kühlwasserleitung 1 eingespeist.

Die Schleuse 8 besteht, wie die Fig. 2 und 3 zeigen, aus einem zylindrischen Gehäuse 11, das mit einer Bodenplatte 12 und einem Deckel 13 versehen ist. Das Zuleitungsrohr 6 ragt mit einem Stutzen 14 radial in den oberen Teil des Gehäuses 11, während das Ableitungsrohr 9 diametral gegenüberliegend mit einem Stutzen 15 radial in den unteren Teil des Gehäuses 11 ragt. Die von den Enden der beiden Stutzen 14, 15 gebildeten Dichtungsränder 16, 17 sind schräg angeschnitten und verlaufen etwa um 45° schräg zu ihrer Längsachse. Beide Dichtungsränder 16, 17 bzw. Öffnungen der Stutzen 14, 15 weisen in die gleiche Drehrichtung, gemäß Fig. 3 entgegen dem Uhrzeigersinn.

Im zylindrischen Gehäuse 11 ist eine zentrische Welle 18 gelagert, die an der Bodenplatte 12 in einem Topflager 19 geführt ist. An der Welle 18 sind diametral gegenüberliegend Dreharme 22, 23 befestigt, an deren Enden je eine Absperrklappe 20, 21 derart angeordnet ist, daß diese in der in den Fig. 2 und 3 gezeigten Stellung dicht gegen die Dichtungsränder 16, 17 der Stutzen 14, 15 anliegen. Die Absperrklappen 20, 21 und/oder Dichtungsränder 16, 17 sind mit geeigneten Dichtungsringen o. dgl. ausgerüstet. In der Schließstellung ist die Welle 18 im Uhrzeigersinn ganz nach rechts gedreht (vgl. Fig. 3).

Weiterhin ist im zylindrischen Gehäuse 11 in einer Höhe zwischen den beiden Stutzen 14, 15 eine Siebplatte 24 fest angeordnet, die mit einem sektorförmigen Ausschnitt 25 versehen ist, der sich über etwa ein Viertel des Umfangs erstreckt. Die drehbare Welle 18 ragt durch eine entsprechend große zentrische Öffnung der Siebplatte 24 hindurch. Der sektorförmige Ausschnitt 25 ist durch einen Drehschieber 26 verschließbar, der aus einer halbkreisförmigen Scheibe besteht, die an der Welle 18 befestigt ist, wobei deren Sekante 27 etwa parallel zu den Absperrklappen 20, 21 verläuft. Der flache Drehschieber 26 ist knapp unter der Siebplatte 24 und parallel zu dieser verdrehbar an der Welle 18 befestigt.

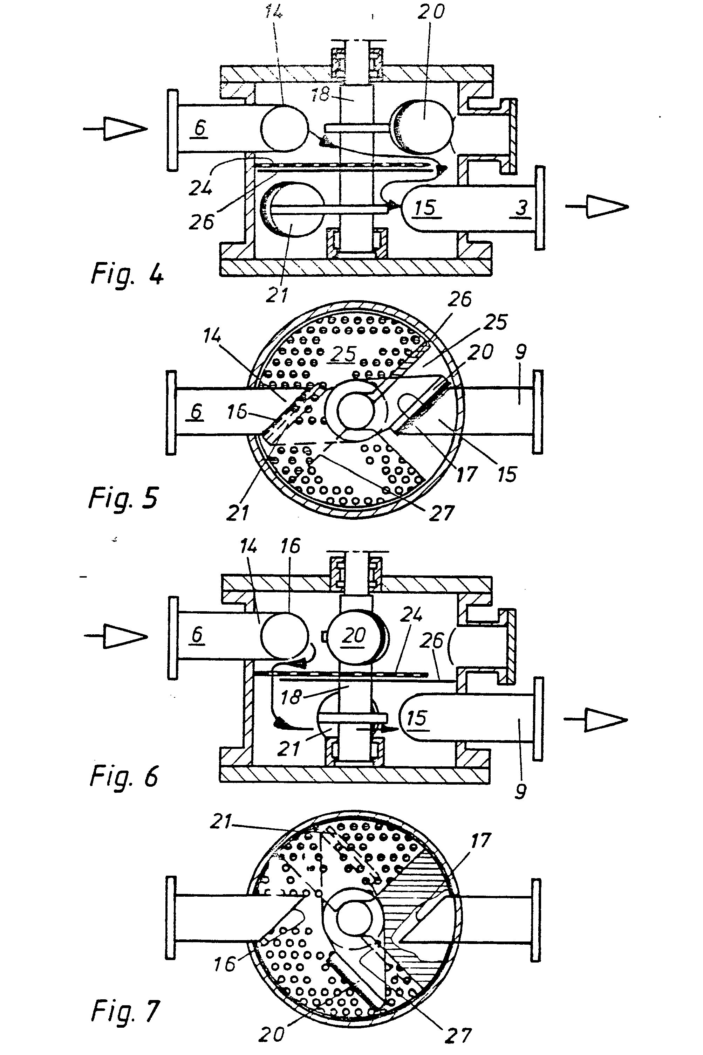

Wird die Welle 18 aus der in den Fig. 2 und 3 gezeigten Lage entgegen dem Uhrzeigersinn um etwa 180° verdreht, werden die Stutzen 14, 15 geöffnet und der Drehschieber 26 gibt den sektorförmigen Ausschnitt 25 frei (vgl. Fig. 4 und 5). Dies ist die Durchlaufstellung, in der die kugelförmigen Reinigungskörper für eine kontinuierliche Reinigung im Kreislauf durch den Röhrenwärmetauscher 2 geführt werden. Die Reinigungskörper können dabei durch den Ausschnitt 25 hindurchströmen. Sollen die Reinigungskörper in der Schleuse 8 eingefangen werden, wird die Welle 18 aus der Durchlaufstellung im Uhrzeigersinn um 90° gedreht, so daß die eine Hälfte des Drehschiebers 26 den Ausschnitt 25 verschließt (vgl. Fig. 6 und 7) und zwar das Wasser durch die Siebplatte 24 strömen kann, jedoch die Reinigungskörper zurückgehalten und in dem über der Siebplatte 24 vorhandenen Raum gesammelt werden. Sind alle im Umlauf gewesenen Reinigungskörper eingefangen, kann entweder durch weiteres Verdrehen der Welle 18 im Uhrzeigersinn um 90° die in den Fig. 2 und 3 gezeigte Kontrollstellung, oder durch Verdrehen der Welle 18 entgegen dem Uhrzeigersinn um 90° die in den Fig. 4 und 5 gezeigte Durchlaufstellung eingestellt werden. Der Antrieb der Welle 18 in die drei Positionen kann mit einem Stellmotor 28 geschehen, der beispielsweise an eine geeignete Programmsteuerung angeschlossen ist.

Aus der vorgenannten Funktionsbeschreibung ergibt sich, daß der halbkreisförmige Drehschieber 26 den Ausschnitt 25 nur in der Durchflußstellung freigibt, in der die Welle 18 entgegen dem Uhrzeigersinn ganz nach links gedreht ist (Fig. 4 und 5), während der Ausschnitt 25 in den beiden anderen Drehlagen der Welle 18 verschlossen ist.

## Patentansprüche

1. Schleuse (8) zum Auffangen kugelförmiger, aus Schaumgummi bestehender Reinigungskörper, die im Kreislauf durch das Kühlwasser eines Röhrenwärmetauschers (2) o. dgl. geführt werden, bestehend aus einem mit einem Sieb ausgerüsteten zylindrischen Gehäuse (11), dessen Zuleitungs- und Ableitungsrohr (6, 9) jeweils mit einem Stutzen (14, 15) in das Gehäuse (11) ragt und mit einem an einer Welle (18) angebrachten Absperrorgan versehen ist, dadurch gekennzeichnet, daß das Sieb aus einer Siebplatte (24) besteht, die zwischen den Stutzen (14, 15) rechtwinklig zur Längsachse des Gehäuses (11) am Gehäuse (11) befestigt ist und einen Ausschnitt (25) aufweist, der durch einen an der zentrisch zur Längsachse des Gehäuses (11) gelagerten Welle (18) angebrachten Drehschieber (26) verschließbar ist und daß an der Welle (18) gegen die Enden der Stutzen (14, 15) anstellbare Absperrklappen (20, 21) angeordnet sind.

2. Schleuse nach Anspruch 1, dadurch gekennzeichnet, daß der Dichtungsrand (16, 17) der beiden Stutzen (14, 15) etwa um 45° zu ihrer Längsachse verläuft und beide Dichtungsränder (16, 17) in die gleiche Drehrichtung weisen.

3. Schleuse nach Anspruch 1 oder 2, dadurch gekennzeichnet, daß die Absperrklappen (20, 21) jeweils auf einem an der Welle (18) befestigten Dreharm (22, 23) derart angebracht sind, daß sie in einer bestimmten Drehlage der Welle (18) beide dicht gegen den Dichtungsrand (16, 17) des zugehörigen Stutzen (14, 15) anliegen.

4. Schleuse nach einem der Ansprüche 1 bis 3, dadurch gekennzeichnet, daß die beiden Stutzen (14, 15) und Absperrklappen (20, 21) jeweils einander diametral gegenüberliegend am Gehäuse (11) bzw. an der Welle (18) angeordnet sind.

5. Schleuse nach einem der Ansprüche 1 bis 4, dadurch gekennzeichnet, daß der Ausschnitt (25) etwa ein Viertel des Umfangs erfaßt und der Drehschieber (26), etwa halbkreisförmig ausgebildet ist, wobei dessen Sekante (27) parallel zu den Absperrklappen (20, 21) verläuft.

6. Schleuse nach einem der Ansprüche 1 bis 5, dadurch gekennzeichnet, daß der Drehschieber (26) parallel zur Siebplatte (24) verdrehbar ist.

7. Schleuse nach einem der Ansprüche 1 bis 6, dadurch gekennzeichnet, daß die Welle (18) mit einem Stellmotor (28) versehen ist.

## Claims

1. An interceptor (8) for intercepting spherical foam rubber cleaning elements circulated by the cooling water of a tubular heat exchanger (2) or the like, the interceptor comprising a cylindrical casing (11) which has a screen and whose inlet pipe (6) and outlet pipe (9) extend into the casing by way of a respective boss (14, 15) and which has a shutoff element disposed on a shaft (18), characterised in that the screen is in the form of a screening plate (24) which is secured to the casing (11) between the bosses (14, 15) perpendicularly to the casing longitudinal axis and which is formed with an aperture (25) closable by a rotary valve (26) disposed on the shaft (18), the same being disposed centrally of the casing longitudinal axis ; and that closure flaps (20, 21) adjustable towards the ends of the bosses (14, 15) are disposed on the shaft (18).

2. An interceptor according to claim 1, characterised in that the sealing edge (16, 17) of the two bosses (14, 15) extends at approximately 45° to their longitudinal axis and both such edges (16, 17) extend in the same direction of rotation.

3. An interceptor according to claim 1 or 2, characterised in that the closure flaps (20, 21) are each so disposed on a rotating arm (22, 23) secured to the shaft (18) as both to engage sealingly with the sealing edge (16, 17) of the respective boss (14, 15) when the shaft (18) is disposed in a particular angular position.

4. An interceptor according to any of claims 1-3, characterised in that the two bosses (14, 15) and closure flaps (20, 21) are disposed diametrically opposite to one another on the casing (11) and shaft (18) respectively.

5. An interceptor according to any of claims 1-4, characterised in that the aperture (25) extends over approximately 25 % of the periphery and the rotary valve (26) is substantially semicircular, the secant (27) of the rotary valve extending parallel to the closure flaps (20, 21).

6. An interceptor according to any of claims 1-5, characterised in that the rotary valve (26) is rotatable parallel to the screening plate (24).

7. An interceptor according to any of claims 1-6, characterised in that the shaft (18) has an actuating motor (28).

**Revendications**

1. Sas (8) pour recueillir des éléments sphériques de nettoyage en caoutchouc cellulaire, qui sont envoyés en circuit fermé dans l'eau de refroidissement d'un échangeur de chaleur tubulaire (2) ou d'un appareil analogue, constitué d'une enveloppe (11) cylindrique qui est munie d'un tamis, dont les conduits d'entrée et de sortie (6, 9) font saillie dans l'enveloppe (11) par des embouts (14, 15) et sont munis d'organes d'obturation montés sur un arbre (18), caractérisé en ce que le tamis est constitué d'une plaque perforée (24) qui est fixée sur l'enveloppe, entre les embouts (14, 15), à angle droit par rapport à l'axe longitudinal de l'enveloppe (11) et qui comporte une échancrure (25) qui peut être fermée par un tiroir tournant (26) fixé sur l'arbre (18) monté en position centrale par rapport à l'axe longitudinal de l'enveloppe (11), et en ce que des volets d'obturation (20, 21) pouvant s'appliquer sur les extrémités des embouts (14, 15) sont montés sur l'arbre (18).

2. Sas suivant la revendication 1, caractérisé en ce que le bord d'étanchéité (16, 17) des deux embouts (14, 15) fait un angle de 45° environ avec son axe longitudinal et les deux bords d'étanchéité (16, 17) sont tournés dans le même sens de rotation.

3. Sas suivant la revendication 1 ou 2, caractérisé en ce que les volets d'obturation (20, 21) sont montés sur un bras tournant (22, 23) fixé à l'arbre (18), de manière à s'appliquer, pour un sens de rotation déterminé de l'arbre (18), tous deux sur le bord d'étanchéité (16, 17) de l'embout (14, 15) concerné.

4. Sas suivant l'une des revendications 1 à 3, caractérisé en ce que les deux embouts (14, 15) et les volets d'obturation (21) sont disposés de manière diamétralement opposée sur l'enveloppe (11) et sur l'arbre (18).

5. Sas suivant l'une des revendications 1 à 4, caractérisé en ce que l'échancrure (25) embrasse environ un quart du pourtour et le tiroir tournant (26) est sensiblement hémi-circulaire, sa sécante (27) étant parallèle aux volets d'obturation (20, 21).

6. Sas suivant l'une des revendications 1 à 5, caractérisé en ce que le tiroir tournant (26) peut tourner parallèlement à la plaque perforée (24).

7. Sas suivant l'une des revendications 1 à 6, caractérisé en ce que l'arbre (18) est muni d'un moteur de commande (28).

0 199 856

Fig. 1

Fig. 2

Fig. 3

1

Fig. 4

Fig. 5

Fig. 6

Fig. 7

2